# EUROPEAN PATENT APPLICATION

(11) **EP 3 594 462 A1**
(43) Date of publication of application: **15.01.2020**
(21) Application number: 18763820.0
(22) Date of filing: 09.03.2018
(51) Int. Cl.: F01N 3/08, B01D 53/94, F01N 3/24

(54) **EXHAUST GAS PURIFICATION APPARATUS**

(30) Priority: 09.03.2017 JP 2017044489
(71) Applicant: Hino Motors, Ltd., Hino-shi, Tokyo 191-8660 (JP)
(72) Inventor: TOMITA, Noriyuki, Hino-shi Tokyo 191-8660 (JP); TONGU, Hirofumi, Hino-shi Tokyo 191-8660 (JP); TSURUTA, Tomoyuki, Hino-shi Tokyo 191-0003 (JP)
(74) Representative: Louis Pöhlau Lohrentz
(86) International application number: PCT/JP2018/009156
(87) International publication number: WO 2018/164256

(57) **Abstract**

Disclosed is an exhaust emission control device having a particulate filter 3 and a selective reduction catalyst 4 arranged in parallel with each other such that entry sides of them are directed in a same direction. A communication passage 16 is arranged to oppositely turn exhaust gas 1 from an exit side of the selective reduction filter 3 into the entry side of the adjacent selective reduction catalyst 4. The urea water (reducing agent) is addable upstream of the communication passage 16. The communication passage 16 is stepwisely turned to the entry side of the adjacent selective reduction catalyst 4 through bending portions x and y downstream of an added position of the urea water. At least the most upstream bending portion x is formed to have a bending angle when viewed from an axial direction of the selective reduction filter 3.

## Description

### Technical Field

The present invention relates to an exhaust emission control device.

### Background Art

It has been recently proposed that a particulate filter for capturing particulates in exhaust gas is incorporated in an exhaust pipe and a selective reduction catalyst capable of selectively reacting NOₓ with ammonia even in the presence of oxygen is arranged downstream of the particulate filter, urea water as a reducing agent being added in a position between the selective reduction catalyst and the particulate filter, thereby attaining lessening of both the particulates and NOₓ.

Such addition of the urea water to the selective reduction catalyst is conducted in the position between the particulate filter and the selective reduction catalyst. Thus, in order to ensure sufficient reaction time for pyrolysis of the urea water added to the exhaust gas into ammonia and carbon dioxide gas, it is necessary to prolong a distance between the urea-water added position and the selective reduction catalyst. However, arrangement of the particulate filter and the selective reduction catalyst in a substantially spaced apart relationship will extremely impair the mountability thereof on a vehicle.

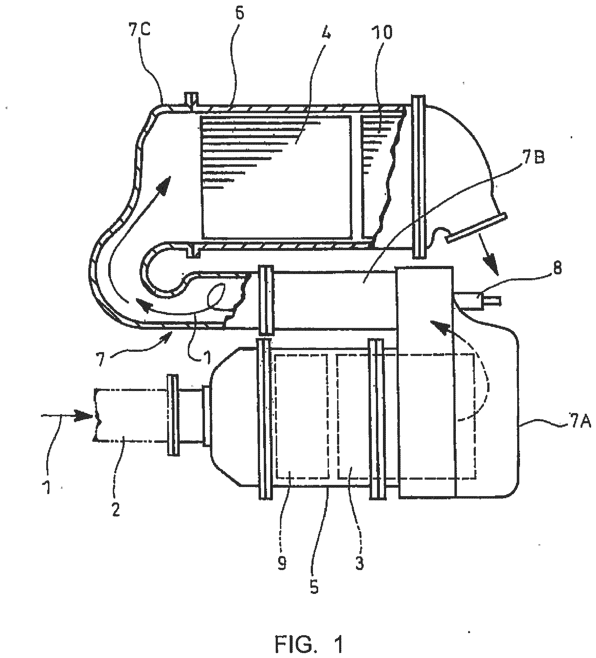

In order to overcome this, an exhaust emission control device compact in size as shown in Fig. 1 has been proposed by the applicant same as that of the present invention (see below-mentioned Patent Literature 1). In the exhaust emission control device illustrated, incorporated in an exhaust pipe 2 through which exhaust gas 1 from an engine flows is a particulate filter 3 housed in a casing 5 to capture particles in the exhaust gas 1; arranged downstream of and in parallel with the particulate filter 3 and housed in a casing 6 is a selective reduction catalyst 4 having a property capable of selectively reacting NOₓ with ammonia even in the presence of oxygen. An exit side of the particulate filter 3 is connected to an entry side of the selective reduction catalyst 4 through an S-shaped communication passage 7 such that the exhaust gas 1 discharged from the exit side of the particulate filter 3 is oppositely turned into the entry side of the adjacent selective reduction catalyst 4.

The communication passage 7 is the S-shaped structure comprising a gas gathering chamber 7A which encircles an exit end of the particulate filter 3 to gather the exhaust gas 1 just discharged therefrom through substantially perpendicular turnabout of the gas, a communication pipe 7B which extracts the gathered exhaust gas 1 from the chamber 7A oppositely to the flow of the exhaust in the particulate filter 3 and a gas dispersing chamber 7C which encircles the entry side of the selective reduction catalyst 4 to disperse the exhaust gas 1 guided by the communication pipe 7B through substantially perpendicular turnabout of the gas into the entry side of the selective reduction catalyst 4. An entry end of the communication pipe 7B is centrally provided with an injector 8 for addition of the urea water into the communication pipe 7B and directed toward the exit side thereof.

In the example illustrated, arranged in the casing 5 and in front of the particulate filter 3 is an oxidation catalyst 9 for oxidization treatment of unburned components in the exhaust gas 1, and arranged in the casing 6 and behind the selective reduction catalyst 4 is an ammonia lessening catalyst 10 for oxidization treatment of surplus ammonia.

With such construction being employed, particulates in the exhaust gas 1 are captured by the particulate filter 3; downstream thereof and at the entry end of the communication pipe 7B, the urea water is added into the exhaust gas 1 by the injector 8 and is pyrolyzed into ammonia and carbon dioxide gas so that NOₓ in the exhaust gas 1 is favorably reduced and depurated by the ammonia on the selective reduction catalyst 4. Thus, both the particulates and NOₓ in the exhaust gas 1 are lessened.

In this case, the exhaust gas 1 discharged from the exit side of the particulate filter 3 is oppositely turned by the communication passage 7 into the entry side of the adjacent selective reduction catalyst 4 so that a long distance is ensured between the urea-water added position and the selective reduction catalyst 4 to ensure enough reaction time for production of ammonia from the urea water.

Moreover, the particulate filter 3 is arranged in parallel with the selective reduction catalyst 4, and the communication passage 7 is arranged between and along the particulate filter 3 and selective reduction catalyst 4 so that the whole structure becomes compact in size to substantially enhance mountability thereof on a vehicle.

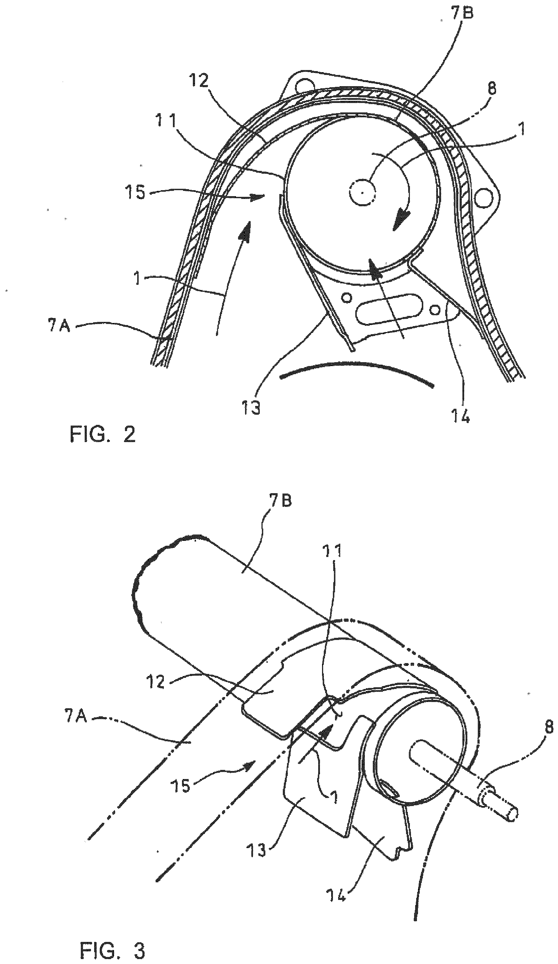

And, as disclosed in the below-mentioned Patent Literature 1, employed in a position where urea water is added by the injector 8 is a mixer structure 15 such that the exhaust gas 1 from the gas gathering chamber 7A is tangentially introduced into entry-side openings 11 on the cylindrical communication pipe 7B by guide fins 12, 13 and 14 as particularly shown in Figs. 2 and 3, thereby affording a swirling flow (swirl) to the exhaust gas 1. The urea water is added centrally of the swirling flow by the injector 8.

Specifically, in order to further effectively facilitate transformation of the urea water into ammonia, it is necessary to positively facilitate gasification of the urea water to proceed with substantive chemical reaction for ammonia production. Thus, the swirling flow is afforded to the exhaust gas 1 and the urea water is added from the injector 8 centrally of the swirling flow, whereby the urea water is effectively contacted with an inner periphery of the communication pipe 7B to facilitate gasification of the urea water through heat receiving from the inner periphery of the communication pipe 7B.

### Citation List

### Patent Literature

Patent Literature 1: JP 2015-048715A

### Summary of Invention

### Technical Problem

In such conventional device, the exhaust gas 1 from the gas gathering chamber 7A is tangentially introduced through the guide fins 12, 13 and 14 into the openings 11 on the entry side of the communication pipe 7B to afford the swirling flow to the exhaust gas 1, thereby enhancing miscibility of the urea water into the exhaust gas 1. Employment of such complicated structure for affording the swirling flow to the exhaust gas 1 is disadvantageous in that substantial runup in cost is inevitably invited by increase in number of parts and in assembly man-hour.

The invention was made in view of the above and has its object to provide an exhaust emission control device which can facilitate gasification of a reducing agent by a simple structure without employing a complicated structure.

### Solution to Problem

The invention is directed to an exhaust emission control device comprising a particulate filter, a selective reduction catalyst for selectively reacting NOₓ with a reducing agent even in the presence of oxygen, said selective reduction catalyst being arranged downstream of and in parallel with said particulate filter such that entry sides of said particulate filter and said selective reduction catalyst are directed in a same direction, and a communication passage for oppositely turning exhaust gas discharged from an exit side of the particulate filter into the entry side of the adjacent selective reduction catalyst, the reducing agent being addable upstream of said communication passage, characterized in that said communication passage is stepwisely turned to the entry side of the adjacent selective reduction catalyst through a plurality of bending portions downstream of an added position of the reducing agent, at least a most upstream bending portion being formed to have a bending angle when viewed from an axial direction of said particulate filter.

Then, the flow of the exhaust gas added with the reducing agent is continuously bent by the plural bending portions and is repeatedly impinged against the inner periphery of the communication passage, which enhances contact frequency of the reducing agent with the inner periphery of the communication passage and increases chances of heat receiving. The flow of the exhaust gas is bent by at least the most upstream bending portion into a diagonal flow to thereby provide a swirling flow, which also enhances the contact frequency of the reducing agent with the inner periphery of the communication passage and increases the chances of heat receiving, so that the gasification of the reducing agent can be facilitated by the simple structure without employing a complicated structure.

Now, the formation of the swirling flow will be supplementarily explained. If all of the bending portions had no bending angle when viewed from the axial direction of the particulate filter and were stepwisely bent on a plane to the entry side of the adjacent selective reduction catalyst, the exhaust gas would flow merely longitudinally of the communication passage while deviated outwardly of bendings of the bending portions. If the most upstream bending portion is formed to have a bending angle when viewed from the axial direction of the particulate filter, the flow of the exhaust gas is guided to slant to the plane, a main flow of the exhaust gas flowing outwardly of the bendings of the bending portions provides the diagonal flow longitudinally of the communication passage, resulting in the swirling flow spirally flowing on the inner periphery of the communication passage.

Moreover, a downstream bending portion or portions succeeding the most upstream bending portion may be formed to have a bending angle or angles just like that of the upper most bending portion when viewed from the axial direction of the particulate filter; it is, of course, necessary in such a case that, when viewed from the axial direction of the particulate filter, the respective bending portions are bent in a same circumferential direction of an axis of the particulate filter so as not to mutually disturb the formation of the swirling flow.

In the invention, it is further preferable that an upstream portion of the communication passage comprises a gas gathering chamber which encircles an exit end of the particulate filter to gather the exhaust gas discharged therefrom through substantially perpendicular turnabout and a communication pipe which extracts the exhaust gas gathered in the gas gathering chamber from an exhaust outlet toward the entry side of the selective reduction catalyst, the reducing agent being addable into the gas gathering chamber by an injector.

Then, the reducing agent can be instantly added by the injector to the exhaust gas in the gas gathering chamber, and even the first bending portion of the communication pipe connected to the exhaust outlet of the gas gathering chamber can exhibit the effect of enhancing contact frequency of the reducing agent, so that continuous bendings can be realized by the plural bending portions of the communication passage without disturbing compaction in size of the whole structure of the exhaust emission control device.

### Advantageous Effects of Invention

According to the above-mentioned exhaust emission control device of the invention, various excellent effects can be obtained as follows.
(I) Without employing a conventionally proposed complicated structure, gasification of the reducing agent can be facilitated by the simple structure of the communication passage bent at the plural positions to oppositely turn the exhaust gas discharged from the exit side of the particulate filter into the entry side of the adjacent selective reduction catalyst, so that attainable is decrease in number of parts and assembly man-hour than ever before to attain substantial reduction in cost. Moreover, the facilitated gasification of the reducing agent can contribute to early realization of transformation of the urea water into ammonia or transformation of fuel into HC gas, leading to full derivation of the catalytic performance of the selective reduction catalyst to obtain high exhaust emission purification effect.
(II) If the upstream portion of the communication passage comprises the gas gathering chamber which encircles the exit end of the particulate filter to gather the exhaust gas discharged from the exit end through substantially perpendicular turnabout and the communication pipe which extracts the exhaust gas gathered in the gas gathering chamber from the exhaust outlet into the entry side of the selective reduction catalyst, the reducing agent being addable into the gas gathering chamber by the injector, then the reducing agent can be instantly added by the injector into the exhaust gas in the gas gathering chamber, and even the first bending portion of the communication pipe connected to the exhaust outlet of the gas gathering chamber can exhibit the effect of enhancing the contact frequency of the reducing agent, so that continuous bendings can be realized by the plural bending portions of the communication passage without disturbing compaction in size of the whole structure of the exhaust emission control device.

### Brief Description of Drawings

Fig. 1 is a partly cut out schematic diagram showing a conventional example;
Fig. 2 is a sectional view showing particulars of important parts in Fig. 1;
Fig. 3 is a perspective view showing the important parts in Fig. 1 in an enlarged scale;
Fig. 4 is a perspective view showing an embodiment of the invention;
Fig. 5 is a plan view of the exhaust emission control device shown in Fig. 4; and
Fig. 6 is a rear view of the exhaust emission control device shown in Fig. 4.

### Description of Embodiment

An embodiment of the invention will be described in conjunction with drawings.

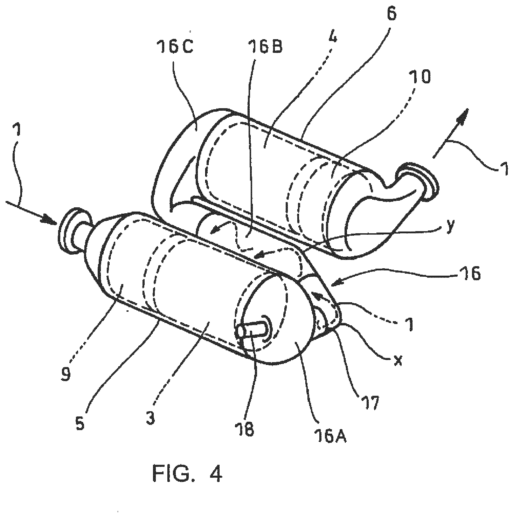

Figs. 4-6 show the embodiment of an exhaust emission control device according to the invention which is substantially similar in construction to that illustrated in the above and shown in Figs. 1-3. Incorporated in an exhaust pipe 2 through which exhaust gas 1 from an engine flows and arranged and housed respectively in casings 5 and 6 in parallel with each other are a particulate filter 3 to capture particles in the exhaust gas 1 and a selective reduction catalyst 4 downstream thereof and having a property capable of selectively reacting NOₓ with ammonia even in the presence of oxygen. A communication passage 16 is provided to oppositely turn the exhaust gas 1 discharged from an exit side of the particulate filter 3 into an entry side of the adjacent selective reduction catalyst 4.

However, the communication passage 16 employs no mixer structure to afford the swirling flow to the exhaust gas 1 as illustrated in the above with respect to Figs. 2 and 3 and provides an S-shaped structure comprising a gas gathering chamber 16A which encircles the exit end of the particulate filter 3 to gather the exhaust gas 1 discharged therefrom through substantially perpendicular turnabout of the gas, a communication pipe 16B which extracts the exhaust gas 1 gathered in the gas gathering chamber 16A through an exhaust outlet 17 to the entry side of the selective reduction catalyst 4 and a gas dispersing chamber 16C which encircles the entry side of the selective reduction catalyst 4 to disperse the exhaust gas 1 guided by the communication pipe 16B through substantially perpendicular turnabout of the gas into the entry side of the selective reduction catalyst 4.

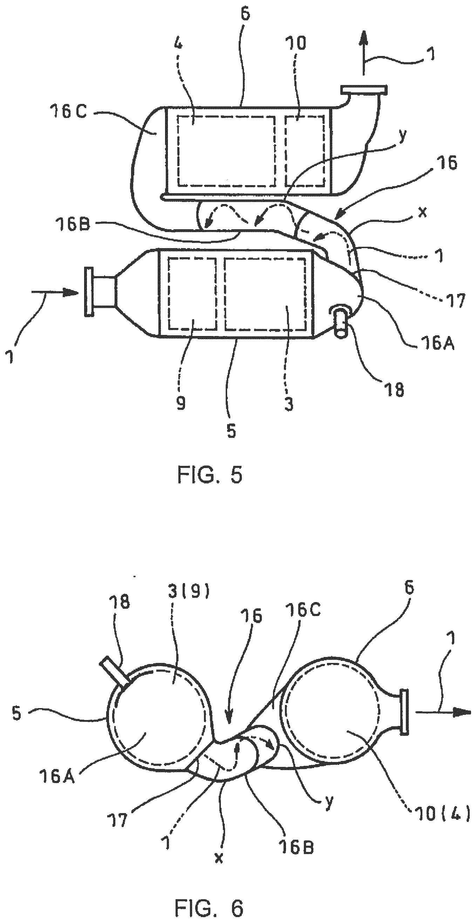

Specifically as shown in Fig. 6, the exhaust outlet 17 of the gas gathering chamber 16A is opened toward not directly downward but slantly downward in a deviated manner toward the selective reduction catalyst 4 by a required angle. An injector 18 is slantly arranged on the gas gathering chamber 16A at a slantly upward position opposing to the exhaust outlet 17 such that urea water (reducing agent) may be injected toward the exhaust outlet 17.

And, the communication pipe 16B connected to the exhaust outlet 17 of the gas gathering chamber 16A is stepwisely turned to the entry side of the adjacent selective reduction catalyst 4 through a first bending portion x arranged most upstream and a second bending portion y arranged downstream thereof; the first bending portion x is formed to have a bending angle when viewed from an axial direction of the particulate filter 3 (see Fig. 6).

More specifically, the first bending portion x is slightly lowered in a slantly downward direction to which the exhaust outlet 17 is directed and then is slantly turned by an obtuse angle toward the entry side of the selective reduction catalyst 4 to extend slantly upward with a gentle rising gradient. The second bending portion y is bent such that the communication pipe 16B guided through the first bending portion x is directed to a direction along the axis of the particulate filter 3.

Also in the embodiment, arranged in the casing 5 and in front of the particulate filter 3 is an oxidation catalyst 9 for oxidization treatment of unburned components in the exhaust gas 1, and arranged in the casing 6 and behind the selective reduction catalyst 4 is an ammonia lessening catalyst 10 for oxidization treatment of surplus ammonia.

With the exhaust emission control device thus constructed, the flow of the exhaust gas 1 added with the urea water is continuously bent by the two bending portions x and y and is repeatedly impinged against the inner periphery of the communication passage 16, which increases contact frequency of the urea water with the inner periphery of the communication passage 16 and increases chances of heat receiving. The flow of the exhaust gas 1 is bent by the first bending portion x into a diagonal flow to thereby provide a swirling flow, which also enhance the contact frequency of the urea water with the inner periphery of the communication passage 16 and increases the chance of heat receiving, so that gasification of the urea water can be facilitated by the simple structure without employing a complicated structure.

Now, the formation of the swirling flow will be supplementarily explained. If all of the bending portions x and y had no bending angle when viewed from the axial direction of the particulate filter and were stepwisely bent on a plane to the entry side of the adjacent selective reduction catalyst 4, the exhaust gas 1 would flow merely longitudinally of the communication passage 16 while deviated outwardly of the bendings of the bending portions. If the first bending portion x is formed to have a bending angle when viewed from the axial direction of the particulate filter 3, the flow of the exhaust gas 1 is guided to slant to the plane, a main flow of the exhaust gas 1 flowing outwardly of the bendings of the bend portions provides the diagonal flow longitudinally of the communication passage 16, resulting in the swirling flow spirally flowing on the inner periphery of the communication passage 16.

In the embodiment shown in Figs. 4-6, the communication pipe 16B connected to the exhaust outlet 17 of the gas gathering chamber 16A is stepwisely turned to the entry side of the adjacent selective reduction catalyst 4 through the two bending portions x and y. Alternatively, three or more bending portions may be formed to be turned; in such a case, also the second and/or succeeding bending portion or portions may be formed to have a bending angle or angles just like that of the first bending portion when viewed from the axial direction of the particulate filter 3; it is necessary in such a case that, when viewed from the axial direction of the particulate filter 3, the respective bending portions are bent in a same circumferential direction of an axis of the particulate filter 3 so as not to mutually disturb the formation of the swirling flow.

As mentioned in the above, according to the above-mentioned embodiment, gasification of the urea water can be facilitated, without employing a conventionally proposed complicated structure, by the simple structure of the communication passage 16 bent at the plural portions to oppositely turn the exhaust gas 1 discharged from the exit side of the particulate filter 3 into the entry side of the adjacent selective reduction catalyst 4, so that attainable is decrease in number of parts and assembly man-hour than ever before to attain substantial reduction in cost. Moreover, the facilitated gasification of the urea water can contribute to early realization of transformation of the urea water into ammonia, leading to full derivation of the catalytic performance of the selective reduction catalyst 4 to obtain high exhaust emission purification effect.

The urea water can be instantly added by the injector 18 into the exhaust gas 1 in the gas gathering chamber 16A, and even the first bending portion x of the communication pipe 16B connected to the exhaust outlet 17 of the gas gathering chamber 16A can exhibit the effect of enhancing the contact frequency of the urea water, so that continuous bendings can be realized by the plural bending portions x and y of the communication passage 16 without disturbing compaction in size of the whole structure of the exhaust emission control device.

Specifically, stepwise turning of the communication pipe 16B through the plural bending portions to the entry side of the adjacent selective reduction catalyst 4 tends to enlarge an occupying space of the communication pipe 16B and invite enlargement in size of the whole structure of the exhaust emission control device; however, if even the first bending portion x of the communication pipe 16B connected to the exhaust outlet 17 can be effectively utilized, formation of the bending portions can be suppressed minimum to keep the whole structure of the exhaust emission control device compact in size.

It is to be understood that an exhaust emission control device according to the invention is not limited to the above embodiment and that various changes and modifications may be made without departing from the scope of the invention. For example, though the description is made on the embodiment shown in Figs. 4-6 where the reducing agent is urea water, alternatively the reducing agent may be fuel, provided that the selective reduction catalyst has a property of selectively reacting NOₓ with HC gas even in the presence of oxygen.

### Reference Signs List

- 1: exhaust gas
- 3: particulate filter
- 4: selective reduction catalyst
- 16: communication passage
- 16A: gas gathering chamber
- 16B: communication pipe
- 17: exhaust outlet
- 18: injector
- x: bending portion
- y: bending portion

## Claims

1. An exhaust emission control device comprising a particulate filter (3), a selective reduction catalyst (4) for selectively reacting NOₓ with a reducing agent even in the presence of oxygen, said selective reduction catalyst (4) being arranged downstream of and in parallel with said particulate filter (3) such that entry sides of said particulate filter (3) and said selective reduction catalyst (4) are directed in a same direction, and a communication passage (16) for oppositely turning exhaust gas (1) discharged from an exit side of the particulate filter (3) into the entry side of the adjacent selective reduction catalyst (4), the reducing agent being addable upstream of said communication passage (16), wherein said communication passage (16) is stepwisely turned to the entry side of the adjacent selective reduction catalyst (4) through a plurality of bending portions (x, y) downstream of an added position of the reducing agent, at least a most upstream bending portion (x) being formed to have a bending angle when viewed from an axial direction of said particulate filter (3).

2. The exhaust emission control device as claimed in claim 1, wherein an upstream portion of the communication passage (16) comprises a gas gathering chamber (16A) which encircles an exit end of the particulate filter (3) to gather the exhaust gas (1) discharged therefrom through substantially perpendicular turnabout and a communication pipe (16B) which extracts the exhaust gas (1) gathered in the gas gathering chamber (16A) from an exhaust outlet toward the entry side of the selective reduction catalyst (4), the reducing agent being addable into the gas gathering chamber (16A) by an injector (18).
